# EUROPEAN PATENT APPLICATION

(11) **EP 4 815 317 A1**
(43) Date of publication of application: **30.09.2026**
(21) Application number: 26163336.6
(22) Date of filing: 09.03.2026
(51) Int. Cl.: H04B 1/04, H04B 1/18

(54) **CONTACTLESS CONNECTOR WITH ACTIVE CIRCULATOR FOR TRANSMITTER LEAKAGE AND ANTENNA REFLECTION CANCELATION**

(30) Priority: 27.03.2025 US 202519092480
(71) Applicant: NXP USA, Inc, Austin, TX 78735 (US)
(72) Inventor: Mohammadreza, Abbasi, 5656AG Eindhoven (NL); Alamdar, Saeid, 5656AG Eindhoven (NL); Tam, Sai-Wang, 5656AG Eindhoven (NL)
(74) Representative: Schwarzweller, Thomas

(57) **Abstract**

Embodiments of contactless connectors and a device for wireless communications are disclosed. In an embodiment, a contactless connector includes a three-port antenna having a first port, a second port, and a third port and a wireless transceiver operably connected to the three-port antenna. The wireless transceiver includes a pair of active circulators operably connected to the first and second ports of the three-port antenna and a combiner operably connected to the third port of the three-port antenna.

## Description

### BACKGROUND

Contactless connectors, for example, millimeter wave (mmWave) contactless connectors, can be used to replace wired interfaces. However, contactless connectors may be susceptible to communications channel and/or environment variations, such as, mechanical vibrations/deformations and/or temperature changes.

### SUMMARY

Embodiments of contactless connectors and a device for wireless communications are disclosed. In an embodiment, a contactless connector includes a three-port antenna having a first port, a second port, and a third port and a wireless transceiver operably connected to the three-port antenna. The wireless transceiver includes a pair of active circulators operably connected to the first and second ports of the three-port antenna and a combiner operably connected to the third port of the three-port antenna. Other embodiments are also disclosed.

In an embodiment, the wireless transceiver further includes a pair of amplifiers operably connected to the pair of active circulators.

In an embodiment, a differential transmitter signal is applied to the pair of amplifiers.

In an embodiment, the wireless transceiver further includes a low-noise amplifier (LNA) operably connected to an output of the combiner.

In an embodiment, the third port of the three-port antenna includes a receiver port from which wireless signals are received.

In an embodiment, the first and second ports of the three-port antenna include a pair of transmitter ports from which wireless signals are transmitted.

In an embodiment, a first active circulator of the pair of active circulators includes transistors, capacitors, and 90 degree shifters.

In an embodiment, the contactless connector is used for short range communications.

In an embodiment, the short range communications includes wireless communications within a distance of one centimeter.

In an embodiment, a contactless connector for short range communications includes a three-port antenna having a first port, a second port, and a third port, and a wireless transceiver operably connected to the three-port antenna. The wireless transceiver includes a pair of active circulators operably connected to the first and second ports of the three-port antenna, a combiner operably connected to the third port of the three-port antenna, and a pair of amplifiers operably connected to the pair of active circulators.

In an embodiment, a differential transmitter signal is applied to the pair of amplifiers.

In an embodiment, the wireless transceiver further includes an LNA operably connected to an output of the combiner.

In an embodiment, the third port of the three-port antenna includes a receiver port from which wireless signals are received.

In an embodiment, the first and second ports of the three-port antenna include a pair of transmitter ports from which wireless signals are transmitted.

In an embodiment, a first active circulator of the pair of active circulators includes transistors, capacitors, and 90 degree shifters.

In an embodiment, the short range communications include wireless communications within a distance of one centimeter.

In an embodiment, a device for wireless communications includes a pair of active circulators configured to be coupled to first and second ports of a three-port antenna, a combiner configured to be coupled to a third port of the three-port antenna, a pair of amplifiers coupled to the pair of active circulators, where a differential transmitter signal is applied to the pair of amplifiers, and a low-noise amplifier (LNA) coupled to an output of the combiner.

In an embodiment, the third port of the three-port antenna includes a receiver port from which wireless signals are received.

In an embodiment, the first and second ports of the three-port antenna include a pair of transmitter ports from which wireless signals are transmitted.

In an embodiment, a first active circulator of the pair of active circulators includes transistors, capacitors, and 90 degree shifters.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 depicts a contactless connector in accordance with an embodiment of the invention.
Fig. 2 depicts a contactless connector pair in accordance with an embodiment of the present invention.
Fig. 3 depicts an active circulator in accordance with an embodiment of the present invention.
Fig. 4 depicts an active circulator with calibration in accordance with an embodiment of the present invention.
Fig. 5 depicts an active circulator with calibration in accordance with an embodiment of the present invention.
Fig. 6 depicts a contactless connector in accordance with an embodiment of the present invention.
Fig. 7 depicts an example of a wireless communications system in accordance with an embodiment of the invention.
Fig. 8 depicts a three-dimensional (3D) layout of a three-port antenna in accordance with an embodiment of the invention.
Fig. 9 depicts a three-port antenna pair in accordance with an embodiment of the present invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

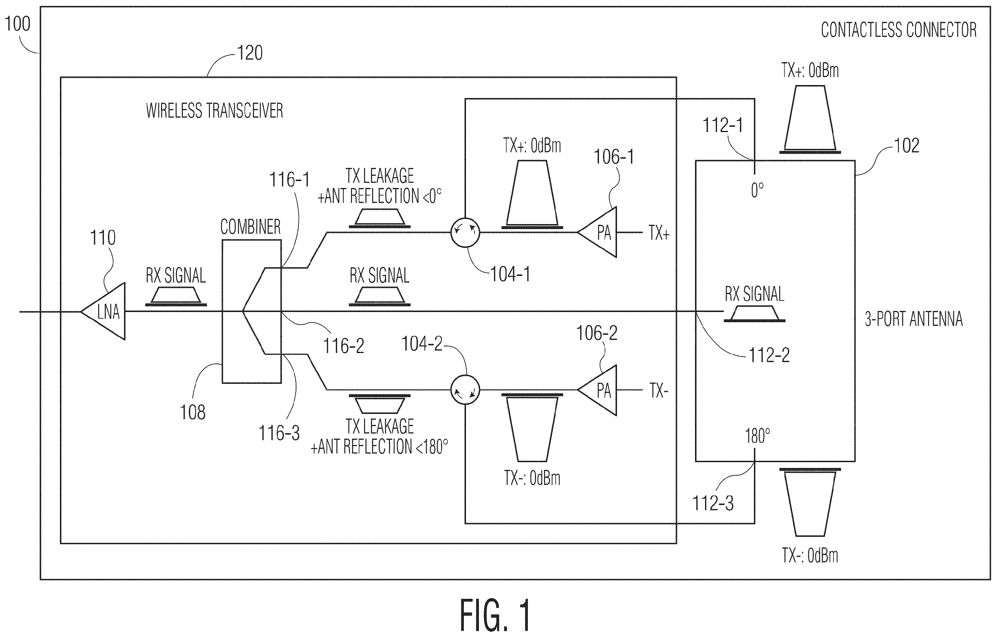

Fig. 1 depicts a contactless connector 100 in accordance with an embodiment of the invention. In the embodiment depicted in Fig. 1, the contactless connector 100 includes a three-port antenna 102, a first active circulator 104-1, a first power amplifier (PA) 106-1, a second active circulator 104-2, a second PA 106-2, a combiner 108, and a low-noise amplifier (LNA) 110. In some embodiment, the first active circulator 104-1, the first PA 106-1, the second active circulator 104-2, the second power amplifier (PA) 106-2, the combiner 108, and the low-noise amplifier (LNA) 110 is included in a wireless transceiver 120 operably connected to the three-port antenna 102. The wireless transceiver 120 may be embodied as an integrated circuit (IC) device. In the embodiment depicted in Fig. 1, a pair of differential transmitter (TX) signals TX+, TX- are applied to or inputted into the first PA 106-1 and the second PA 106-2. The contactless connector 100 can be used in various applications, such as consumer or enterprise applications, medical applications, computer applications, and/or industrial applications. The contactless connector 100 may be fully or partially implemented as at least one integrated circuit (IC) device. In some embodiments, the three-port antenna 102, the first active circulator 104-1, the first PA 106-1, the second active circulator 104-2, the second PA 106-2, the combiner 108, and the LNA 110 are located in the same substrate and are implemented as one IC device. In some embodiments, no external components, such as isolators, directional couplers, attenuators, and/or phase shifters, are used in the contactless connector 100. Although the depicted contactless connector 100 is shown in Fig. 1 with certain components and described with certain functionality herein, other embodiments of the contactless connector 100 may include fewer or more components to implement the same, less, or more functionality. In addition, although the contactless connector 100 is shown in Fig. 1 as being connected in a certain topology, the network topology of the contactless connector 100 is not limited to the topology shown in Fig. 1. The contactless connector 100 can be used as an alternative to a wired connector-based solution or to replace industry standard wired interfaces.

In the embodiment depicted in Fig. 1, the contactless connector 100 can be implemented as an on-chip millimeter wave (mmWave) full duplex connector with a set of balanced active circulators 104-1, 104-2 and the three-port antenna 102. Using the balanced active circulators 104-1, 104-2, the isolation between the transmitter (TX) and the receiver (RX) is enhanced. In addition, the antenna mismatch is suppressed with the three-port antenna 102. Further, the corresponding limitation of the bandwidth density is boosted. The contactless connector 100 can be used in a high bandwidth concurrent bidirectional mmWave contactless connector, which can be insensitive/robust to communication channel and/or environment variation, such as, mechanical vibrations/deformations and temperature changes. In some embodiments, the contactless connector 100 delivers a high data rate radio frequency (RF) communication over a short-range (e.g., below one centimeter (cm)) at a low power consumption level. For example, the contactless connector 100 delivers a data rate of 5 gigabits per second (Gbps) up to 80 Gbps or above over a wireless channel/frequency range of between 60 gigahertz (GHz) and 100 GHz over a distance of below 1 cm. In some embodiments, the contactless connector 100 is compatible with a Universal Serial Bus (USB) or DisplayPort (DP) over RF protocol.

In the embodiment depicted in Fig. 1, the combiner 108 is configured to combine signals from the first active circulator 104-1 and the second active circulator 104-2. In some embodiments, the combiner 108 is a power combiner configured to combine powers received from multiple ports.

In the embodiment depicted in Fig. 1, the three-port antenna 102 has three ports/terminals 112-1, 112-2, 112-3 from which signals are receiver or transmitted. In the embodiment depicted in Fig. 1, the three-port antenna 102 can transmit in a differential mode and receives in a single-ended mode. The pair of active circulators 104-1, 104-2 are operably connected to the ports 112-1, 112-3 of the three-port antenna 102, which are transmitter ports from which wireless signals are transmitted, and the combiner 108 is operably connected to the port 112-2 of the three-port antenna 102, which is a receiver port from which wireless signals are received. In the embodiment depicted in Fig. 1, the LNA 110 is operably connected to an output of the combiner 108 and is configured to amplify a low-power received (RX) signal without significantly degrading its signal-to-noise ratio (SNR).

In the embodiment depicted in Fig. 1, the first active circulator 104-1 and the second active circulator 104-2 are active, non-reciprocal three-port devices that only allow the signal propagation through one direction. However, small amount of TX leakages can leak through the first active circulator 104-1 and the second active circulator 104-2 to reach the combiner 108. In the embodiment depicted in Fig. 1, the TX leakage of the positive TX signal (TX+) through the PA 106-1 and the TX leakage of the negative TX signal (TX-) through the PA 106-2 are out of phase and canceled out at the combiner 108. Specifically, the TX leakage of the positive TX signal (TX+) through the PA 106-1 leaks through the first active circulator 104-1 and is received at a port 116-1 of the combiner 108, while the TX leakage of the negative TX signal (TX-) through the PA 106-2 leaks through the second active circulator 104-2 and is received at a port 116-3 of the combiner 108. The TX leakage through the port 116-1 and the TX leakage through the port 116-3 are out of phase and canceled out at the combiner 108. In addition, the antenna reflection of the positive TX signal (TX+) through the PA 106-1 and the antenna reflection of the negative TX signal (TX-) through the PA 106-2 are out of phase and canceled out at the combiner 108. Specifically, the antenna reflection of the positive TX signal (TX+) through the PA 106-1 from the port 112-1 of the three-port antenna 102 passes through the first active circulator 104-1 and is received at the port 116-1 of the combiner 108, while the antenna reflection of the negative TX signal (TX-) through the PA 106-2 from the port 112-3 of the three-port antenna 102 passes through the second active circulator 104-2 and is received at the port 116-3 of the combiner 108. The antenna reflection through the port 116-1 and the antenna reflection through the port 116-3 are out of phase and canceled out at the combiner 108. The RX signal received from the port 112-2 of the three-port antenna 102 is received at a port 116-2 of the combiner 108. Because the TX leakages and the antenna reflections are out of phase and canceled out at the combiner 108, the TX/RX isolation between the transmitter (TX) and the receiver (RX) is effectively enhanced, the antenna mismatch is suppressed, and the bandwidth density is significantly boosted.

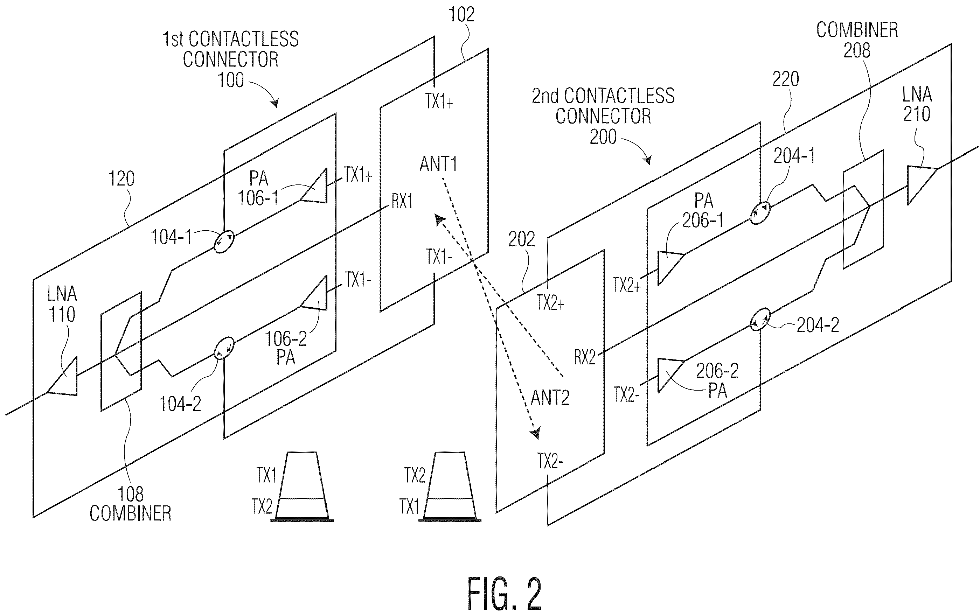

Fig. 2 depicts a contactless connector pair in accordance with an embodiment of the present invention. In the embodiment depicted in Fig. 2, the contactless connector 100 wirelessly communicates with a contactless connector 200, which includes a three-port antenna 202, an active circulator 204-1, a PA 206-1, an active circulator 204-2, a PA 206-2, a combiner 208, and a low-noise amplifier (LNA) 210, which may be similar to or the same as the three-port antenna 102, the first active circulator 104-1, the first PA 106-1, the second active circulator 104-2, the second PA 106-2, the combiner 108, and the low-noise amplifier (LNA) 110 depicted in Fig. 1, respectively. In some embodiment, the active circulator 204-1, the PA 206-1, the active circulator 204-2, the PA 106-2, the combiner 208, and the LNA 210 is included in a wireless transceiver 220, which may be embodied as an integrated circuit (IC) device. In the embodiment depicted in Fig. 2, a pair of differential transmitter (TX) signals TX+, TX- are inputted into the PA 206-1 and the PA 206-2. The contactless connector 200 may be fully or partially implemented as at least one integrated circuit (IC) device. In some embodiments, the three-port antenna 202, the active circulator 204-1, the PA 206-1, the active circulator 204-2, the PA 206-2, the combiner 208, and the LNA 210 are located in the same substrate and are implemented as one IC device. Although the depicted contactless connector 200 is shown in Fig. 2 with certain components and described with certain functionality herein, other embodiments of the contactless connector 200 may include fewer or more components to implement the same, less, or more functionality. In addition, although the contactless connector 200 is shown in Fig. 2 as being connected in a certain topology, the network topology of the contactless connector 200 is not limited to the topology shown in Fig. 2. The contactless connector 200 can be used as an alternative to a wired connector-based solution or to replace industry standard wired interfaces.

In the embodiment depicted in Fig. 2, the contactless connector 100 and the contactless connector 200 can conduct a high data rate RF communication over a short-range (e.g., below one centimeter (cm)) at a low power consumption level. For example, the contactless connector 100 and the contactless connector 200 can deliver a data rate of 5 gigabits per second (Gbps) up to 80 Gbps or above over a wireless channel/frequency range of between 60 gigahertz (GHz) and 100 GHz over a distance of below 1 cm. For example, the TX-RX insolation can be around 60dB, the TX-antenna insertion loss can be less than 3dB, the insolation bandwidth can be higher than 10% because of the balanced topology, and the sensitivity to Voltage Standing Wave Ratio (VSWR) (antenna reflection) is reduced. In some embodiments, simple cancelation and/or calibration is conducted because most of the isolation comes from the balanced topology. The contactless connector 100 and the contactless connector 200 can be implemented with less substrate area with active components. In some embodiments, the contactless connector 100 and the contactless connector 200 are implemented as a millimeter wave (mmWave) full duplex connector system with the balanced active circulators 104-1, 104-2, 204-1, 204-2 and the three-port antennas 102, 202. Consequently, the isolation between the transmitter (TX) and the receiver (RX) is enhanced, the antenna mismatch is suppressed, and the bandwidth density is boosted. The contactless connector 100 and the contactless connector 200 can be used in a high bandwidth concurrent bidirectional mmWave contactless connector system, which can be insensitive/robust to communication channel and/or environment variation, such as, mechanical vibrations/deformations and temperature changes.

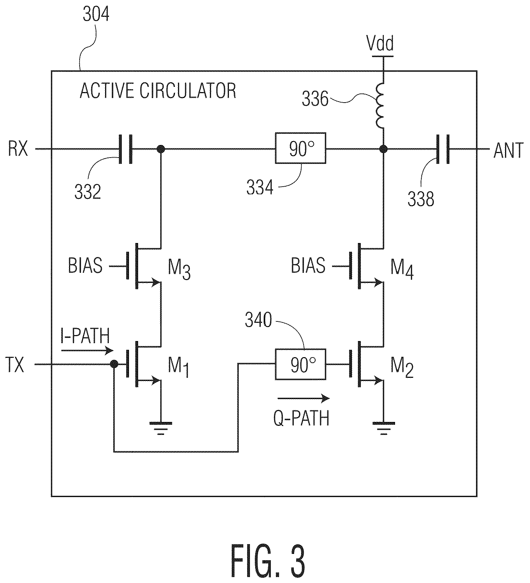

Fig. 3 depicts an active circulator 304 in accordance with an embodiment of the present invention. The active circulator 304 depicted in Fig. 3 is an embodiment of the active circulators 104-1, 104-2 depicted in Fig. 1 and/or the active circulators 104-1, 104-2, 204-1, 204-2 depicted in Fig. 2. However, the active circulators 104-1, 104-2 depicted in Fig. 1 and/or the active circulators 104-1, 104-2, 204-1, 204-2 depicted in Fig. 2 are not limited to the embodiment depicted in Fig. 3. In the embodiment depicted in Fig. 3, the active circulator 304 includes a capacitor 332, a 90 degree shifter 334, an inductor 336, a capacitor 338, four transistors M1, M2, M3, M4, and a 90 degree shifter 340. In the embodiment depicted in Fig. 3, out-of-phase from TX to RX, I-path: 0-180:-180, Q-path:0+90-180+90:0, while in-phase from TX to ANT: I-path: 0-180+90:-90, Q-path:0+90-180:-90. The active circulator 304 may be fully or partially implemented as at least one integrated circuit (IC) device. Although the depicted active circulator 304 is shown in Fig. 3 with certain components and described with certain functionality herein, other embodiments of the active circulator 304 may include fewer or more components to implement the same, less, or more functionality. In addition, although the active circulator 304 is shown in Fig. 3 as being connected in a certain topology, the network topology of the active circulator 304 is not limited to the topology shown in Fig. 3. In some embodiments, the active circulator 304 can be replaced with a passive hybrid coupler-based circulator to make the design compact.

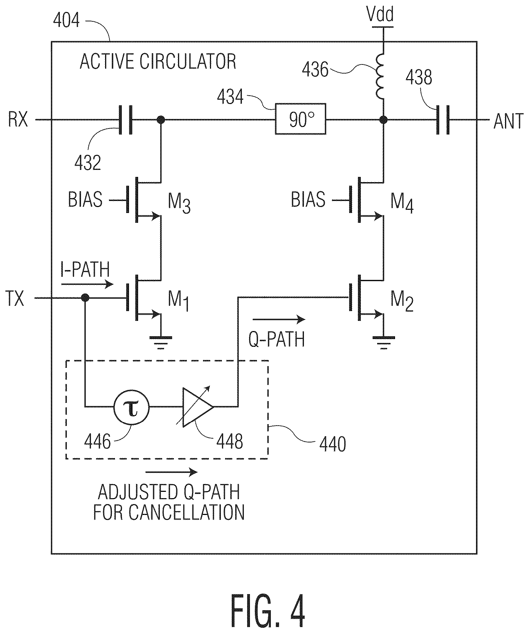

In some embodiments, calibration is conducted in the active circulator 304 depicted in Fig. 3. Fig. 4 depicts an active circulator 404 with calibration in accordance with an embodiment of the present invention. The active circulator 404 depicted in Fig. 4 is an embodiment of the active circulator 304 depicted in Fig. 3. However, the active circulator 304 depicted in Fig. 3 is not limited to the embodiment depicted in Fig. 4. In the embodiment depicted in Fig. 4, the active circulator 404 includes a capacitor 432, a 90 degree shifter 434, an inductor 436, a capacitor 438, four transistors M1, M2, M3, M4, and a 90 degree shifter 440 that includes a delay element 446 and an amplifier 448. The active circulator 404 may be fully or partially implemented as at least one integrated circuit (IC) device. In some embodiments, the amplitude and phase of the Q-path is adjusted to minimize the leakage to the RX port. True-time delay can be implemented on-chip with a wide-band delay line.

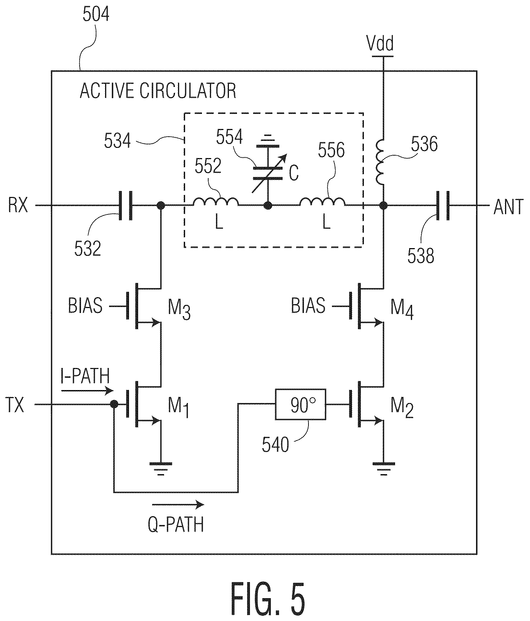

Fig. 5 depicts an active circulator 504 with calibration in accordance with an embodiment of the present invention. The active circulator 504 depicted in Fig. 5 is an embodiment of the active circulator 304 depicted in Fig. 3. However, the active circulator 304 depicted in Fig. 3 is not limited to the embodiment depicted in Fig. 5. In the embodiment depicted in Fig. 5, the active circulator 504 includes a capacitor 532, a 90 degree shifter 534, which includes two inductors 552, 556 and an adjustable capacitor 554, an inductor 536, a capacitor 538, four transistors M1, M2, M3, M4, and a 90 degree shifter 540. The active circulator 404 may be fully or partially implemented as at least one integrated circuit (IC) device. In some embodiments, the capacitance of the adjustable capacitor 554 is tuned to minimize the leakage to the RX.

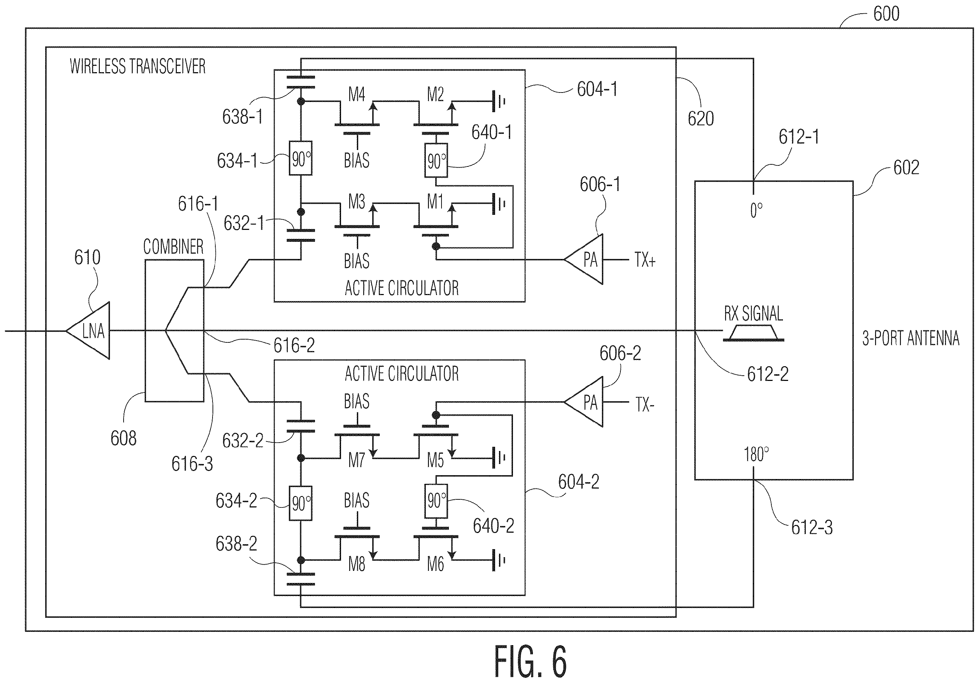

Fig. 6 depicts a contactless connector 600 in accordance with an embodiment of the present invention. The contactless connector 600 depicted in Fig. 6 is an embodiment of the contactless connector 100 depicted in Fig. 1 and/or the contactless connectors 100, 200 depicted in Fig. 2. However, the contactless connector 100 depicted in Fig. 1 and/or the contactless connectors 100, 200 depicted in Fig. 2 are not limited to the embodiment depicted in Fig. 6. In the embodiment depicted in Fig. 6, the contactless connector 600 includes a three-port antenna 602, a first active circulator 604-1, a first PA 606-1, a second active circulator 604-2, a second PA 606-2, a combiner 608, and an LNA 610, which may be similar to or the same as the three-port antenna 102, the first active circulator 104-1, the first PA 106-1, the second active circulator 104-2, the second PA 106-2, the combiner 108, and the low-noise amplifier (LNA) 110 depicted in Fig. 1, respectively. In some embodiment, the first active circulator 604-1, the first PA 606-1, the second active circulator 604-2, the second PA 606-2, the combiner 608, and the LNA 610 is included in a wireless transceiver 620, which may be embodied as an integrated circuit (IC) device. In the embodiment depicted in Fig. 6, a pair of differential transmitter (TX) signals TX+, TX- are inputted into the first PA 606-1 and the second PA 606-2. The contactless connector 600 may be fully or partially implemented as at least one integrated circuit (IC) device. In some embodiments, the three-port antenna 602, the active circulator 604-1, the PA 606-1, the active circulator 604-2, the PA 606-2, the combiner 608, and the LNA 610 are located in the same substrate and are implemented as one IC device. Although the depicted contactless connector 600 is shown in Fig. 6 with certain components and described with certain functionality herein, other embodiments of the contactless connector 600 may include fewer or more components to implement the same, less, or more functionality. In addition, although the contactless connector 600 is shown in Fig. 6 as being connected in a certain topology, the network topology of the contactless connector 600 is not limited to the topology shown in Fig. 6. The contactless connector 600 can be used as an alternative to a wired connector-based solution or to replace industry standard wired interfaces.

In the embodiment depicted in Fig. 6, the contactless connector 600 can be implemented as an on-chip mmWave full duplex connector with a set of balanced active circulators 604-1, 604-2 and the three-port antenna 602. The contactless connector 600 can be used in a high bandwidth concurrent bidirectional mmWave contactless connector, which can be insensitive to communication channel environment variation, such as, mechanical vibration/deformation and temperature changes. In some embodiments, the contactless connector 600 delivers a high data rate RF communication over a short-range (e.g., below 1 cm) at a low power consumption level. For example, the contactless connector 600 delivers a data rate of 5 Gbps up to 80 Gbps or above over a wireless channel/frequency range of between 60 GHz and 100 GHz over a distance of below 1 cm. In some embodiments, the contactless connector 600 is compatible with a USB or DP over RF protocol.

In the embodiment depicted in Fig. 6, the combiner 608 is configured to combine signals from the first active circulator 604-1 and the second active circulator 604-2. In some embodiments, the combiner 608 is a power combiner configured to combine powers received from multiple ports. In the embodiment depicted in Fig. 6, the three-port antenna 602 has three ports or terminals 612-1, 612-2, 612-3 from which signals are received or transmitted. In the embodiment depicted in Fig. 6, the three-port antenna 602 can transmit in a differential mode and receives in a single-ended mode. In the embodiment depicted in Fig. 6, the LNA 610 is configured to amplify a low-power received (RX) signal without significantly degrading its signal-to-noise ratio (SNR).

In the embodiment depicted in Fig. 6, the active circulator 604-1 includes a capacitor 632-1, a 90 degree shifter 634-1, a capacitor 638-1, four transistors M1, M2, M3, M4, and a 90 degree shifter 640-1, while the active circulator 604-2 includes a capacitor 632-2, a 90 degree shifter 634-2, a capacitor 638-2, four transistors M5, M6, M7, M8, and a 90 degree shifter 640-2. The first active circulator 604-1 and the second active circulator 604-2 are active, non-reciprocal devices that only allow the signal propagation through one direction. However, small amount of TX leakages can leak through the first active circulator 604-1 and the second active circulator 604-2 to reach the combiner 608. In the embodiment depicted in Fig. 6, the TX leakage of the positive TX signal (TX+) through the PA 606-1 and the TX leakage of the negative TX signal (TX-) through the PA 606-2 are out of phase and canceled out at the combiner 608. Specifically, the TX leakage of the positive TX signal (TX+) through the PA 606-1 leaks through the first active circulator 604-1 and is received at a port 616-1 of the combiner 608, while the TX leakage of the negative TX signal (TX-) through the PA 606-2 leaks through the second active circulator 604-2 and is received at a port 616-3 of the combiner 608. The TX leakage through the port 616-1 and the TX leakage through the port 616-3 are out of phase and canceled out at the combiner 608. In addition, the antenna reflection of the positive TX signal (TX+) through the PA 606-1 and the antenna reflection of the negative TX signal (TX-) through the PA 606-2 are out of phase and canceled out at the combiner 608. Specifically, the antenna reflection of the positive TX signal (TX+) through the PA 606-1 from the port 612-1 of the three-port antenna 602 passes through the first active circulator 604-1 and is received at the port 616-1 of the combiner 608, while the antenna reflection of the negative TX signal (TX-) through the PA 606-2 from the port 612-3 of the three-port antenna 602 passes through the second active circulator 604-2 and is received at the port 616-3 of the combiner 608. The antenna reflection through the port 616-1 and the antenna reflection through the port 616-3 are out of phase and canceled out at the combiner 608. The RX signal received from the port 612-2 of the three-port antenna 602 is received at a port 616-2 of the combiner 608. Because the TX leakages and the antenna reflections are out of phase and canceled out at the combiner 608, the TX/RX isolation between the transmitter (TX) and the receiver (RX) is effectively enhanced, the antenna mismatch is suppressed, and the bandwidth density is significantly boosted.

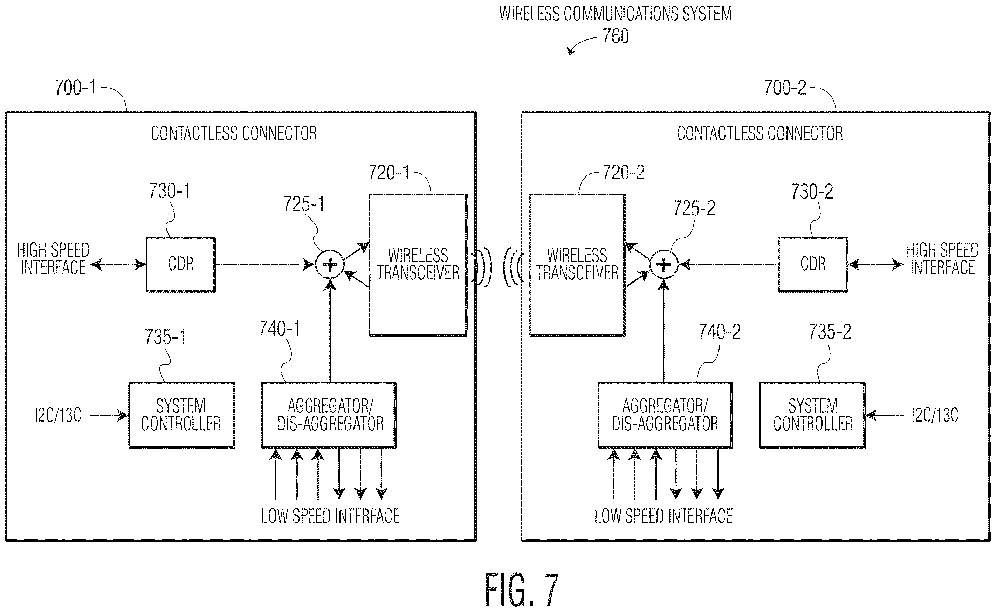

Fig. 7 depicts an example of a wireless communications system 760 in accordance with an embodiment of the invention. The wireless communications system 760 may be a short-range communications system, for example, used for wireless communications within a distance of one centimeter. In the embodiment depicted in Fig. 7, the wireless communications system 760 includes a first contactless connector 700-1 that includes a wireless transceiver 720-1, an aggregator/dis-aggregator 740-1 that may be connected to one or more low speed interfaces (e.g., Universal Asynchronous Receiver/Transmitter (UART), Serial Wire Debug (SWD), or I2C), a system controller 735-1 that may be connected to I2C/I3C interface, a Clock Data Recovery (CDR) 730-1 that may be connected to a high speed interface, and a switch/multiplexer 725-1, and a second contactless connector 700-2 that includes a wireless transceiver 720-2, an aggregator/dis-aggregator 740-2 that may be connected to one or more low speed interfaces (e.g., UART, SWD, or I2C), a system controller 735-2 that may be connected to I2C/I3C interface, a Clock Data Recovery (CDR) 730-2 that may be connected to a high speed interface, and a switch/multiplexer 725-2. In some embodiments, the wireless communications system 760 is full-duplex. The contactless connectors 700-1, 700-2 may be embodiments of the contactless connector 100 depicted in Fig. 1 and/or the contactless connector 600 depicted in Fig. 6. Each of the contactless connectors 700-1, 700-2 may be fully or partially implemented as an integrated circuit (IC) device. Although the depicted wireless communications system 760 is shown in Fig. 7 with certain components and described with certain functionality herein, other embodiments of the wireless communications system 760 may include fewer or more components to implement the same, less, or more functionality. In addition, although the wireless communications system 760 is shown in Fig. 7 as being connected in a certain topology, the network topology of the wireless communications system 760 is not limited to the topology shown in Fig. 7. In some embodiments, the wireless communications system 760 delivers a high data rate radio frequency (RF) communication over a short-range (e.g., below one centimeter (cm)) at a low power consumption level. For example, the wireless communications system 760 delivers a data rate of 5 gigabits per second (Gbps) up to 80 Gbps or above over a wireless channel/frequency range of between 60 gigahertz (GHz) and 100 GHz over a distance of below 1 cm. In some embodiments, the wireless communications system 760 is compatible with a Universal Serial Bus (USB) or DisplayPort (DP) over RF protocol.

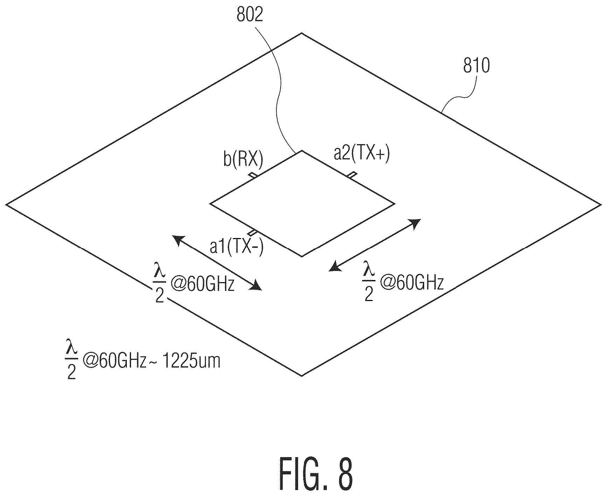

Fig. 8 depicts a three-dimensional (3D) layout of a three-port antenna 802 in accordance with an embodiment of the invention. The three-port antenna 802 depicted in Fig. 8 is an embodiment of the three-port antenna 102 depicted in Fig. 1, the three-port antennas 102, 202 depicted in Fig. 2, and/or the three-port antenna 602 depicted in Fig. 6. However, the three-port antenna 102 depicted in Fig. 1, the three-port antennas 102, 202 depicted in Fig. 2, and/or the three-port antenna 602 depicted in Fig. 6 are not limited to the embodiment depicted in Fig. 8. In the embodiment depicted in Fig. 8, the three-port antenna 802 has two ports/terminals a1(TX-), a2(TX+) from which signals are transmitted and a port/terminal b(RX) from which signals are received and is located in a 3D plane 810. In some embodiments, the branches/sides of the three-port antenna 802 have a dimension of λ/2, where λ represents the operational frequency of the three-port antenna 802. For example, for a frequency of 60 Gigahertz (GHz), a branch/side of the three-port antenna 802 is about 1,225 µm (micrometers). The three-port antenna 802 can transmit in a differential mode and receives in a single-ended mode.

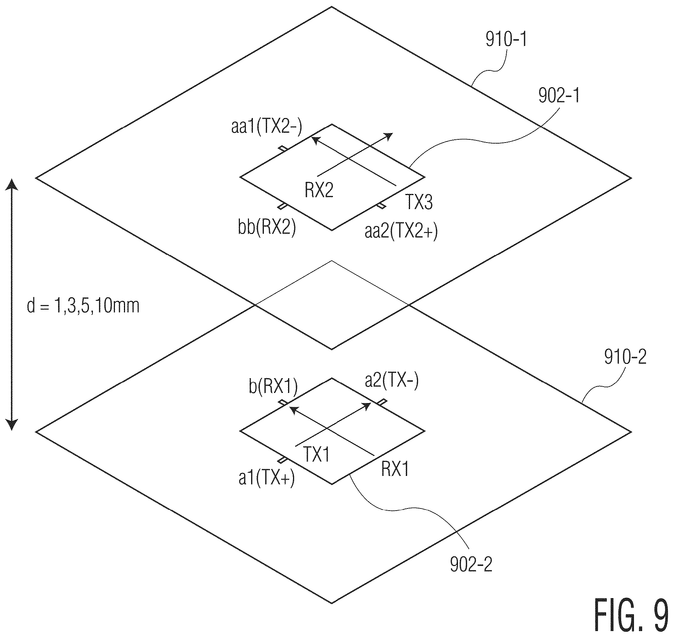

Fig. 9 depicts a three-port antenna pair in accordance with an embodiment of the present invention. In the embodiment depicted in Fig. 9, the three-port antenna pair includes two three-port antennas 902-1, 902-2 that can be used to conduct a high data rate RF communication over a short-range (e.g., below one centimeter (cm)) at a low power consumption level. For example, the distance (d) between the three-port antennas 902-1, 902-2 may be 1, 3, 5, or 10 millimeters (mm). The three-port antennas 902-1, 902-2 depicted in Fig. 9 are embodiments of the three-port antenna 102 depicted in Fig. 1, the three-port antennas 102, 202 depicted in Fig. 2, the three-port antenna 602 depicted in Fig. 6, and/or the three-port antenna 802 depicted in Fig. 8. However, the three-port antenna 102 depicted in Fig. 1, the three-port antennas 102, 202 depicted in Fig. 2, the three-port antenna 602 depicted in Fig. 6, and/or the three-port antenna 802 depicted in Fig. 8 are not limited to the embodiment depicted in Fig. 9. In the embodiment depicted in Fig. 9, the three-port antenna 902-1 has two ports/terminals aa1(TX2-), aa2(TX2+) from which signals are transmitted and a port/terminal bb(RX2) from which signals are received and is located in a 3D plane 910-1, while the three-port antenna 902-2 has two ports/terminals a1(TX1+), a2(TX1-) from which signals are transmitted and a port/terminal b(RX1) from which signals are received and is located in a 3D plane 910-2. The 3D plane 910-2 may be in parallel with or orthogonal to the 3D plane 910-1. In some embodiments, the branches/sides of the three-port antenna 902-1 or 902-2 have a dimension of λ/2, where λ represents the operational frequency of the three-port antenna. For example, for a frequency of 60 Gigahertz (GHz), a branch/side of the three-port antenna 902-1 or 902-2 is about 1,225 µm (micrometers). The three-port antennas 902-1, 902-2 can transmit in a differential mode and receives in a single-ended mode.

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A contactless connector comprising:
a three-port antenna having a first port, a second port, and a third port; and
a wireless transceiver operably connected to the three-port antenna, wherein the wireless transceiver comprises:
a pair of active circulators operably connected to the first and second ports of the three-port antenna; and
a combiner operably connected to the third port of the three-port antenna.

2. The contactless connector of claim 1, wherein the wireless transceiver further comprises a pair of amplifiers operably connected to the pair of active circulators.

3. The contactless connector of claim 2, wherein a differential transmitter signal is applied to the pair of amplifiers.

4. The contactless connector of any preceding claim, wherein the wireless transceiver further comprises a low-noise amplifier, LNA, operably connected to an output of the combiner.

5. The contactless connector of any preceding claim, wherein the third port of the three-port antenna comprises a receiver port from which a plurality of wireless signals are received.

6. The contactless connector of any preceding claim, wherein the first and second ports of the three-port antenna comprise a pair of transmitter ports from which a plurality of wireless signals are transmitted.

7. The contactless connector of any preceding claim, wherein a first active circulator of the pair of active circulators comprises a plurality of transistors, a plurality of capacitors, and a plurality of 90 degree shifters.

8. The contactless connector of any preceding claim, wherein the contactless connector is used for short range communications.

9. The contactless connector of claim 8, wherein the short range communications comprise wireless communications within a distance of one centimeter.

10. A contactless connector as claimed in any preceding claim, being for short range communications and further comprising:
a pair of amplifiers operably connected to the pair of active circulators.

11. The contactless connector of claim 10, wherein a differential transmitter signal is applied to the pair of amplifiers.

12. The contactless connector of claim 10 or 11, wherein the wireless transceiver further comprises a low-noise amplifier (LNA) operably connected to an output of the combiner.

13. The contactless connector of any of claims 10 to 12, wherein the third port of the three-port antenna comprises a receiver port from which a plurality of wireless signals are received.

14. The contactless connector of any of claims 10 to 13, wherein the first and second ports of the three-port antenna comprise a pair of transmitter ports from which a plurality of wireless signals are transmitted.

15. The contactless connector of any of claims 10 to 14, wherein a first active circulator of the pair of active circulators comprises a plurality of transistors, a plurality of capacitors, and a plurality of 90 degree shifters.
